# EUROPEAN PATENT SPECIFICATION

(11) **EP 3 501 808 B1**
(45) Date of publication and mention of the grant of the patent: **15.06.2022**
(21) Application number: 17210004.2
(22) Date of filing: 22.12.2017
(51) Int. Cl.: B29D 99/00, B29C 70/86

(54) **A PRE-FORMED SPAR CAP ASSEMBLY FOR EMBEDDING IN A WIND TURBINE ROTOR BLADE**
VORGEFORMTE HOLMGURTANORDNUNG ZUR EINBETTUNG IN EINE WINDTURBINENROTORSCHAUFEL
ENSEMBLE SEMELLE DE LONGERON PRÉFORMÉ POUR INTÉGRATION DANS UNE PALE DE ROTOR DE TURBINE ÉOLIENNE

(43) Date of publication of application: 26.06.2019
(73) Proprietor: Siemens Gamesa Renewable Energy A/S, 7330 Brande (DK)
(72) Inventor: Girolamo, Donato, 9400 Nørresundby (DK); Kristensen, Jens Jørgen Østergaard, 9400 Nørresundby (DK); Noerlem, Michael, 9230 Svenstrup (DK)
(74) Representative: Aspacher, Karl-Georg

(56) References cited:
- EP-A2- 2 778 393
- WO-A1-2017/216155
- WO-A2-2014/096002
- WO-A2-2015/003719

## Description

The present invention relates generally to wind turbines, and in particular, to a spar cap of a wind turbine rotor blade. More specifically, the present invention relates to pre-formed spar caps for embedding into the wind turbine rotor blades during manufacturing of such wind turbine rotor blades.

Dimensions of wind turbines and wind blades are ever increasing, and consequently are increasing the challenges to overcome during the manufacturing processes of such wind turbine rotor blades. Presently, preferred materials used to manufacture wind turbine rotor blades, hereinafter also referred to as the blades, are glass- and/or carbon-fiber reinforced plastics commonly referred to as "composites", which are generally processed through hand lay-up and resin injection molding processes. Larger sections, longer spans, thicker structural components of the blades make the resin flow very complex to design and optimize, and thus posing an increased risk of manufacturing errors such as transverse wrinkles, poor impregnation of the resin, air pockets, large areas with dry fibers, and so on and so forth. These errors can extend over wide areas, can be very time consuming and very costly to repair and can drastically affect the cost and reliability of the final product i.e. the manufactured blade for the wind turbine. Additionally, hand lay-up of composite structures to form the spar caps of wind turbine rotor blades becomes very time-consuming especially with the increase of thicknesses and number of layers required in manufacturing of the spar caps. EP 2778393 A2 discloses a spar cap assembly and a method of producing the same. The spar cap assembly comprises a spar cap section and two adjoining ramp sections encapsulated by wrapping layers.

Recent developments in the wind turbine industry have led to the introduction of pre-fabricated or pre-formed spar caps that are then used as integral components and embedded in the wind turbine rotor blades during manufacturing of such wind turbine rotor blades, particularly during the resin injection molding of the shell of wind turbine rotor blades. The pre-formed spar caps are assembled in the blade molds with panels and other blade components to form the shell of the rotor blade.

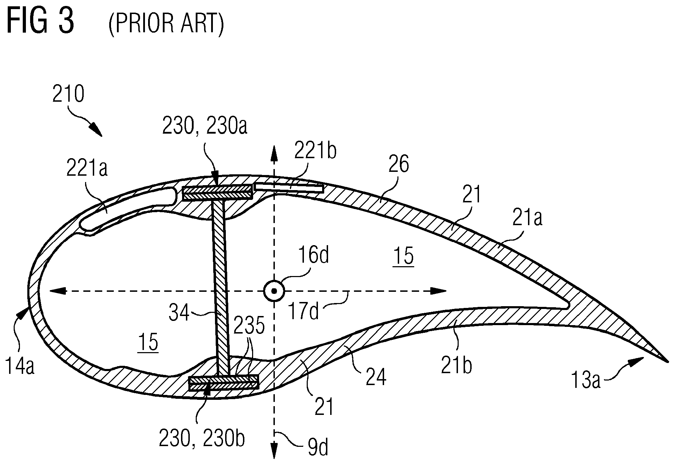

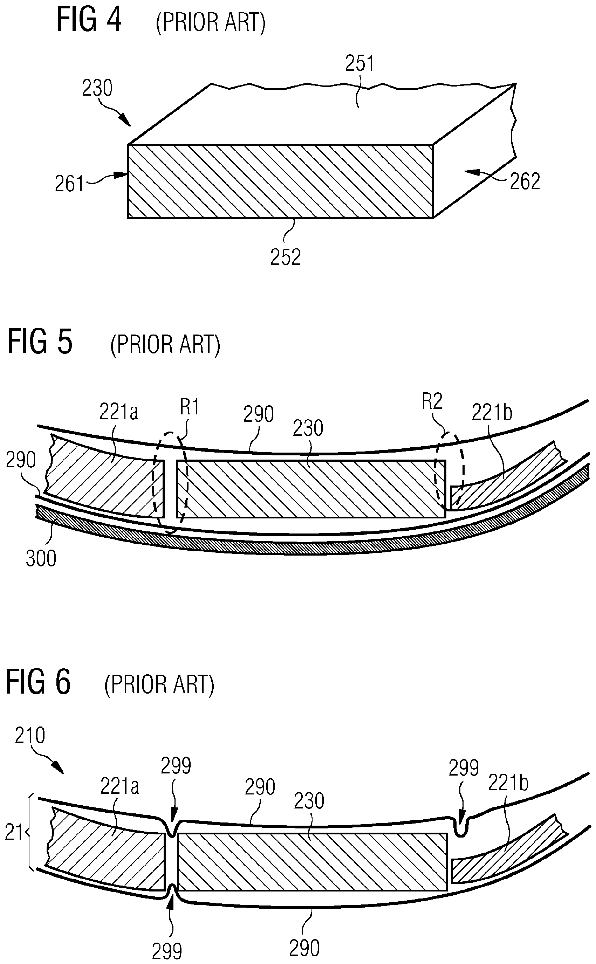

FIG 3 shows a cross-sectional view of an airfoil section of a conventionally known rotor blade 210, hereinafter also referred to as the conventional blade 210, having spar caps 230 of the conventional blade 210. One such conventionally known pre-fabricated spar cap 230 is schematically depicted in FIG 4. The conventionally known pre-fabricated spar cap 230, hereinafter also referred to as the conventional spar cap 230 is defined by planar surfaces and generally resembles a longitudinally elongated rectangular parallelepiped such as a bar or slab, and has a rectangular shaped cross-section when sectioned normally to the longitudinal extension. The spar caps 230 are generally connected to each other via a web 34 that runs through a cavity 15 in a flap-wise direction 9d of the blade 210.

The conventional spar cap 230, as depicted in FIG 4 is defined by first and second longitudinally extending faces 251, 252 and by first and second longitudinally extending lateral sides 261, 262, thereby resembling shape of a bar or slab. The spar cap 230 extends along a spanwise direction 16d of the blade 210. A chordwise direction 17d of the blade 210 is also depicted in FIG 3. As shown in FIG 3, the conventional blade 210 includes a shell 21. The shell 21, or simply referred to as the shell 21, is generally made from two half shells i.e. a leeward shell 21a and a windward shell 21b both moulded generally from glass-fiber reinforced plastics that are laid up in form of multiple sheets and then moulded. This is generally referred to as the 'butterfly blade' since it has two separate half shells 21a, 21b that are later assembled with each other to form the complete shell 21 for example the two half shells 21a, 21b are glued together to form the shell 21. Alternatively, the blade 210 may include a shell 21 that is formed integrally i.e. the shell 21 does not have the two half shells 21a, 21b but instead is formed in one-part as is done in the well known integral blade construction of Siemens. Parts of the shell 21 have a sandwich panel construction and comprise a core of lightweight material such as balsa, PU foam, etc. sandwiched between inner and outer surfaces or facesheets of the shell 21. For example, FIG 3 schematically shows two such panels - a thick panel 221a and a thin panel 221b that form the core and are assembled with the conventional spar cap 230. The thick panel 221a is generally arranged from the conventional spar cap 230 and extends towards a leading edge 14a of the conventional blade 210, whereas the thin panel 221b is generally arranged from the conventional spar cap 230 and extends towards a trailing edge 13a of the conventional blade 210.

The conventional spar cap 230 assembled with the panels 221a, 221b is covered on top and bottom by wrapping layers 290, also referred to as the inner and outer facesheets that are spread in a blade mould 300, as schematically shown in FIG 5. Thereafter resin injection is performed accompanied by or preceded by vacuum application to the blade mould 300 thereby forming the shell 21 of the blade 210 as shown in FIG 6. Since the conventional spar cap 230 is preformed or prefabricated as an integral unit it is of utmost importance to get the assembly of the conventional spar cap 230, the thick and the thin panels 221a, 221b to be precise, or in other words the positional tolerance of the assembly of the conventional spar cap 230, the thick and the thin panels 221a, 221b is low. If the assembling of the conventional spar cap 230, the thick and the thin panels 221a, 221b is not precise, regions R1 and/or R2 as shown in FIG 5 develop within the blade mould 300. The region R1 results from a gap that comes into existence because of improper placement of the conventional spar cap 230 and one of the panels 221a, 221b, as shown for the panel 221a of FIG 5. The region R2 results from a sharp contrast or difference between thickness of the conventional spar cap 230 and one of the panels 221a, 221b, as shown for the panel 221b of FIG 5. The wrapping layers 290 in the regions R1 and/or R2 are inadequately supported by the interface of the conventional spar caps 230 and the panels 221a, 221b and thus result into longitudinal wrinkles 299 as shown in FIG 6.

Thus in a nutshell the positional tolerance of the conventional spar cap 230 is low and leads to development of one or more problematic region R1 during manufacturing of the wind turbine blades 210. Furthermore, due to variation in thickness of the panels 221a, 221b that are assembled with the spar caps 230, one or more problematic region R2 may develop that may also weakening of the blade structure by development of longitudinal wrinkles 299. Therefore there exists a need for a technique that ensures that positional tolerance of the prefabricated or preformed spar caps, which are subsequently used for embedding into the shell 21 during blade manufacturing, is relatively higher as compared to the conventional spar cap 230. Furthermore it is also desired that development of regions such as R2 of FIG 3 of high thickness difference in the assembly of the preformed spar cap and the panels is avoided.

The object of the present invention is to provide a technique that ensures that formation of regions R1 and/or R2 in the shell 21 is at least partially obviated during the blade manufacturing process.

The abovementioned object is achieved by a spar cap assembly according to claim 1 of the present technique, by a wind turbine rotor blade according to claim 8, a wind turbine according to claim 9 of the present technique, and by a method for manufacturing a spar cap assembly according to claim 10 of the present technique, as well as a method for manufacturing a wind turbine blade according to claim 15. Advantageous embodiments of the present technique are provided in dependent claims. In a first aspect of the present technique a spar cap assembly for a wind turbine rotor blade is presented. The spar cap assembly is an integral structure and is pre-formed or pre-casted for the purpose of incorporating or embedding into a shell of a wind turbine rotor blade during manufacturing of the wind turbine rotor blade. The spar cap assembly includes a spar cap section, a first ramp section, a second ramp section and one or more wrapping layers within which the spar cap section, the first ramp section and the second ramp section are encapsulated by resin injection molding.

The spar cap section includes a composite material, such as a glass-fiber composite, a carbon-fiber composite, an aramid-fiber composite and a basalt-fiber composite. The spar cap section may be made by mats or fabrics of composite material or by pultruded strips made of composite material such as carbon fiber reinforced plastic, glass fiber reinforced plastic, etc. The spar cap section has three mutually perpendicular axes - a longitudinal axis, a vertical axis and a transverse axis.

With respect to the spar cap assembly or the spar cap section or the first ramp section or the second ramp section, the term 'longitudinally' means along the longitudinal axis or parallel to the longitudinal axis. Similarly, with respect to the spar cap assembly or the spar cap section or the first ramp section or the second ramp section, the term 'vertically' and the term 'transversally' or 'horizontally' means along the vertical axis or parallel to the vertical axis and along the transverse axis or parallel to the transverse axis, respectively.

The spar cap section has longitudinally extending slab shape and is defined by first and second mutually opposed and longitudinally extending faces and by first and second longitudinally extending lateral sides. The separation between the first and second faces defines thickness of the spar cap section. The first and the second faces of the spar cap section are vertically separated, whereas the first and the second lateral sides are transversely separated.

The first ramp section extends longitudinally and is positioned adjoining the first lateral side of the spar cap section. The first ramp section has mutually opposed spar cap side and sloped side. The spar cap side of the first ramp section adjoins the first lateral side of the spar cap section and has a thickness equal to the thickness of the first lateral side of the spar cap section. The sloped side of the first ramp section slopes outward with respect to the spar cap section. The first ramp section further comprises a mid-section having a thickness equal to or greater than the thickness of the spar cap side of the first ramp section. The second ramp section extends longitudinally and is positioned adjoining the second lateral side of the spar cap section. The second ramp section has spar cap side and sloped side. The spar cap side of the second ramp section adjoins the second lateral side of the spar cap section and has a thickness equal to the thickness of the second lateral side of the spar cap section. The sloped side of the second ramp section slopes outward with respect to the spar cap section. All the aforementioned thicknesses are measured along or parallel to the vertical axis of the spar cap section.

As a result of the sloped sides of the first and the second ramp sections, which are preferably aligned with the thick panel of the shell and with a thin panel of the shell that have complementary shapes to the sloped sides, the spar cap assembly is able to absorb larger position tolerances when the spar cap assembly is subsequently used for embedding with the panels during the manufacturing of the blade of the wind turbine. Furthermore, since the spar cap sides of the first and the second ramps are equal thickness as the first and the second lateral sides of the spar cap section of the spar cap assembly, the transition from the spar cap section to the panels via the first and the second ramp sections is gradual as compared to sharp transitions seen in the conventionally known spar caps and panel arrangements, and thus risks such as initiation and development of longitudinal wrinkles in the shell of the turbine blade having the spar cap assembly of the present technique is reduced or obviated.

In an embodiment of the spar cap assembly, the first ramp section and/or the second ramp section are made from at least one of balsa wood, a honeycomb-core material and a foam-core material. Thus the material of the ramp sections is similar to the material of the panels used as the core in the sandwich panel construction of the shell of the wind turbine rotor blade.

In another embodiment of the spar cap assembly, the spar cap section includes a stack of pultruded strips, for example pultruded strips having unidirectional fibers of the aforementioned composite materials. The pultruded strips are easy to stack, and are structurally strong.

In another embodiment of the spar cap assembly, the one or more wrapping layers is one of glass-fiber reinforced fabric, carbon-fiber reinforced fabric, aramid-fiber reinforced fabric and basalt-fiber reinforced fabric. Thus the wrapping layers are formed of the same or similar material with which the skins of the shell of the wind turbine blades are formed.

In a second aspect of the present technique, a wind turbine rotor blade is presented. The wind turbine rotor blade includes at least one spar cap assembly embedded in a shell of the wind turbine rotor blade, wherein the spar cap assembly is same as mentioned hereinabove with respect to the first aspect of the present technique. Such wind turbine rotor blades are structurally stronger and have a decreased risk of formation of longitudinal wrinkles as compared to the conventionally known wind turbine rotor blades.

In a third aspect of the present technique, a wind turbine is presented. The wind turbine includes at least one wind turbine rotor blade, wherein the wind turbine rotor blade is same as mentioned hereinabove with respect to the second aspect of the present technique.

In a fourth aspect of the present technique, a method for manufacturing a spar cap assembly for a wind turbine rotor blade is presented. In the method, one or more wrapping layers are spread in a resin injection mould. The resin injection mould is a mould for making the spar cap assembly of first aspect of the present technique, and not the mould in which the blade is manufactured. The one or more wrapping layers are one of glass-fiber reinforced fabric, carbon-fiber reinforced fabric, aramid-fiber reinforced fabric and basalt-fiber reinforced fabric. Thereafter, strips are stacked in the resin injection mould atop the spread wrapping layers to form a slab shaped stack of the strips. The strips are formed of at least one of a glass-fiber composite, a carbon-fiber composite, an aramid-fiber composite and a basalt-fiber composite. The stack basically forms the spar cap section of the spar cap assembly of the aforementioned first aspect. Thus, the stack, similar to the spar cap section, is defined by first and second mutually opposed and longitudinally extending faces and by first and second longitudinally extending lateral sides. The separation between the first and second faces defines thickness of the stack. The stack has a vertical axis extending between the first and the second faces and a transverse axis extending between the first and the second lateral sides, and a longitudinal axis. The longitudinal axis, the vertical axis and the transverse axis are mutually perpendicular. In the method, a longitudinally extending first ramp section and a longitudinally extending second ramp sections are placed in the resin injection mould atop the wrapping layers adjoining the first lateral side and the second lateral side of the stack, respectively. The first and the second ramp sections are same as described hereinabove with respect to the first aspect of the present technique. The stack, the first ramp section and the second ramp section are then encapsulated by the wrapping layers placed previously in the resin injection mould, or by spreading one or more additional wrapping layers atop the stack and the first and the second ramp sections such that the additional wrapping layers along with the previously spread wrapping layers encapsulate the stack, the first ramp section and the second ramp section. The one or more additional wrapping layers is one of glass-fiber reinforced fabric, carbon-fiber reinforced fabric, aramid-fiber reinforced fabric and basalt-fiber reinforced fabric. Subsequently, resin is supplied to and caused to infiltrate the stack, the first and the second ramp sections the wrapping layers, and the additional wrapping layers if present. Finally, in the method, the resin is cured to mutually bond the strips of the stack, the first and the second ramp sections, the wrapping layers, and the additional wrapping layers if present.

In a final aspect of the present technique a method for manufacturing a wind turbine rotor blade is presented. The wind turbine rotor blade is manufactured using a pre-formed or pre-casted spar cap assembly. The pre-formed spar cap assembly is according to the first aspect of the present technique described hereinabove.

The above mentioned attributes and other features and advantages of the present technique and the manner of attaining them will become more apparent and the present technique itself will be better understood by reference to the following description of embodiments of the present technique taken in conjunction with the accompanying drawings, wherein:
- FIG 1: schematically depicts a wind turbine having a wind turbine rotor blade in which a spar cap assembly of the present technique may be incorporated;
- FIG 2: schematically depicts the wind turbine rotor blade in which the spar cap assembly of the present technique may be incorporated;
- FIG 3: depicts a cross-sectional view of an airfoil of a conventionally known turbine blade having a conventionally known spar cap;
- FIG 4: depicts a detailed view of the conventionally known pre-formed spar cap;
- FIG 5: depicts a conventionally known assembly of the conventionally known spar cap with panels as arranged in a blade mould during blade manufacturing using the conventionally known spar cap;
- FIG 6: schematically depicts a cross-sectional view of a conventionally known blade having the conventionally spar cap and depicting formation of longitudinal wrinkles;
- FIG 7: schematically depicts a perspective view of an exemplary embodiment of a spar cap assembly of the present technique;
- FIG 8: schematically depicts separated sub-components of the spar cap assembly of the present technique;
- FIG 9: presents a flow chart depicting a method for manufacturing the spar cap assembly in accordance with aspects of the present technique;
- FIG 10: schematically depicts a cross-sectional view of the spar cap assembly of the present technique assembled with panels for forming the shell of the wind turbine rotor blade; and
- FIG 11: schematically depicts a cross-sectional view of a part of the wind turbine rotor blade having the spar cap assembly of the present technique.

Hereinafter, above-mentioned and other features of the present technique are described in details. Various embodiments are described with reference to the drawing, wherein like reference numerals are used to refer to like elements throughout. In the following description, for the purpose of explanation, numerous specific details are set forth in order to provide a thorough understanding of one or more embodiments. It may be noted that the illustrated embodiments are intended to explain, and not to limit the invention. It may be evident that such embodiments may be practiced without these specific details.

It may be noted that in the present disclosure, the terms "first", "second", "third" etc. are used herein only to facilitate discussion, and carry no particular temporal or chronological significance unless otherwise indicated.

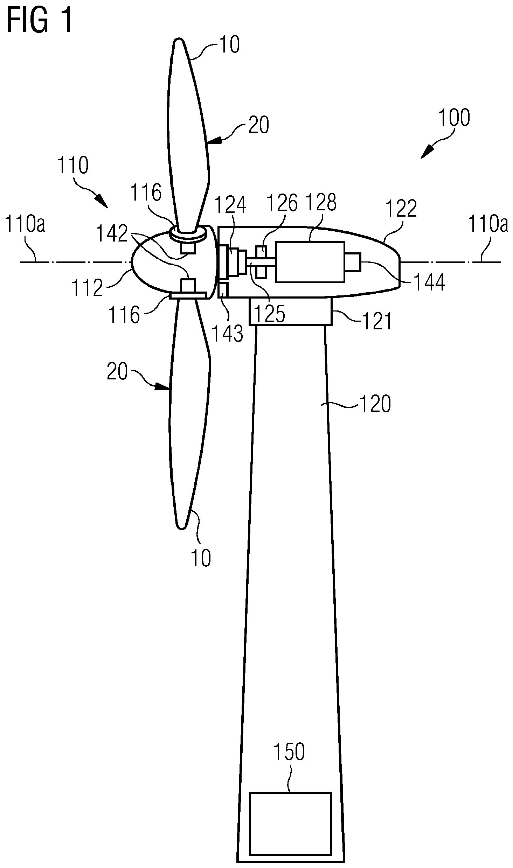

FIG 1 shows an exemplary embodiment of a wind turbine 100 of the present technique. The wind turbine 100 includes a tower 120, which is mounted on a fundament (not shown). A nacelle 122 is mounted on top of the tower 120 and rotatable with regard to the tower 120 by means of a yaw angle adjustment mechanism 121 such as yaw bearings and yaw motors. The yaw angle adjustment mechanism 121 functions to rotate the nacelle 122 around a vertical axis (not shown) referred to as a yaw axis, which is aligned with the longitudinal extension of the tower 120. The yaw angle adjustment mechanism 121 rotates the nacelle 122 during operation of the wind turbine 100 to ensure that the nacelle 122 is appropriately aligned with the current wind direction to which the wind turbine 100 is subjected.

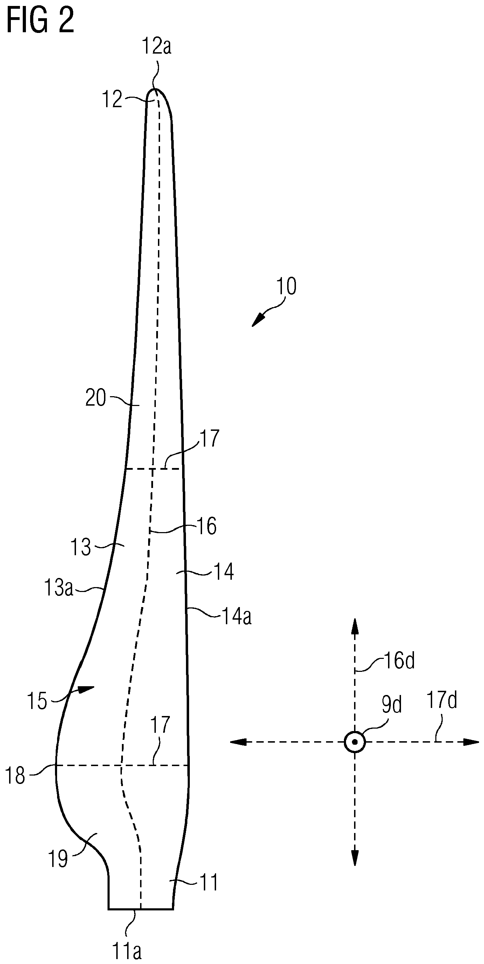

The wind turbine 100 further includes a rotor 110 having at least a rotor blade 10, and generally three rotor blades 10, although in the perspective view of FIG 1 only two rotor blades 10 are visible. One of the rotor blades 10 is schematically depicted in FIG 2. The rotor 110 is rotatable around a rotational axis 110a. The rotor blades 10, hereinafter also referred to as the blades 10 or as the blade 10 when referring to one of the blades 10, are generally mounted at a driving collar 112, also referred to as a hub 112. The hub 112 is mounted rotatable with regard to the nacelle 122 by means of a main bearing (not shown). The hub 112 is rotatable about the rotational axis 110a. Each of the blades 10 extends radially with respect to the rotational axis 110a and has an airfoil section 20.

In between the hub 112 and each of the rotor blades 10, is provided a blade adjustment mechanism 116 in order to adjust the blade pitch angle of the blade 10 by rotating the respective blade 10 about a longitudinal axis (not shown) of the blade 10. The longitudinal axis of each of the blade 10 is aligned substantially parallel with the longitudinal extension of the respective blade 10. The blade adjustment mechanism 116 functions to adjust blade pitch angles of the respective blade 10.

The wind turbine 100 includes a main shaft 125 that rotatably couples the rotor 110, particularly the hub 112, to a generator 128 housed within the nacelle 122. The hub 112 is connected to a rotor of the generator 128. In an exemplary embodiment (not shown) of the wind turbine 100, the hub 112 is connected directly to the rotor of the generator 128, thus the wind turbine 100 is referred to as a gearless, direct drive wind turbine 100. As an alternative, as shown in the exemplary embodiment of FIG 1, the wind turbine 100 includes a gear box 124 provided within the nacelle 122 and the main shaft 125 connects the hub 112 to the generator 128 via the gear box 124, thereby the wind turbine 100 is referred to as a geared wind turbine 100. The gear box 124 is used to convert the number of revolutions of the rotor 110 into a higher number of revolutions of the main shaft 125, and consequently of the rotor of the generator 128. Furthermore, a brake 126 is provided in order to stop the operation of the wind turbine 100 or to reduce the rotational speed of the rotor 110 for instance in case of a very strong wind and/or in case of an emergency.

The wind turbine 100 further includes a control system 150 for operating the wind turbine 100 at desired operational parameters, for example at a desired yaw angle, with a desired blade pitch, at a desired rotational speed of the rotor 110, and so on and so forth. The controlling and/or adjusting of the operational parameters are performed to obtain an optimized power generation under the existent conditions for example under existent wind conditions and other weather conditions.

The wind turbine 100 may further include different sensors for example a rotational speed sensor 143, a power sensor 144, angle sensors 142, etc that provide inputs to the control mechanism 150 or other components of the wind turbine 100 to optimize operation of the wind turbine 100. Furthermore as shown in FIG 2, the rotor blade 10 includes a root section 11 having a root 11a and an airfoil section 20. Generally, the rotor blade 10 includes a transition section 90 in between the root section 11 and the airfoil section 20. The airfoil section 20, hereinafter also referred to as the airfoil 20, includes a tip section 12 having a tip 12a. The root 11a and the tip 12a are separated by a span 16, of the rotor blade 10, which follows the shape of the rotor blade 10. A direction along or parallel to the span 16 is referred to as span-wise direction 16d. The tip section 12, including the tip 12a therein, extends from the tip 121 towards the root 11a up to a span-wise position of approx 33.3% (percent), i.e. one third of the total length of the blade 10, as measured from the tip 12a. The tip 12a extends within the tip section 12 towards the root 11a up to a span-wise position of approx. one meter. The rotor blade 10 includes a leading edge section 14 having the leading edge 14a, and a trailing edge section 13 having the trailing edge 13a. The trailing edge section 13 surrounds the trailing edge 13a. Similarly, the leading edge section 14 surrounds the leading edge 14a.

At each span-wise position perpendicular to the span 16, a chord line 17 that connects the leading edge 14a and the trailing edge 13a can be defined. A direction along or parallel to the chord line 17 is referred to as chord-wise direction 17d. FIG 2 depicts two such chord lines 17 at two different span-wise positions. Furthermore a direction mutually perpendicular to the span-wise direction 16d and to the chord-wise direction 17d is referred to as the flap-wise direction 9d. The rotor blade 10 has a shoulder 18 that is a section of the rotor blade 10 where the chord line 17 has maximum chord length, i.e. in example of FIG 2 at the chord line 17 that is depicted towards the root 11a.

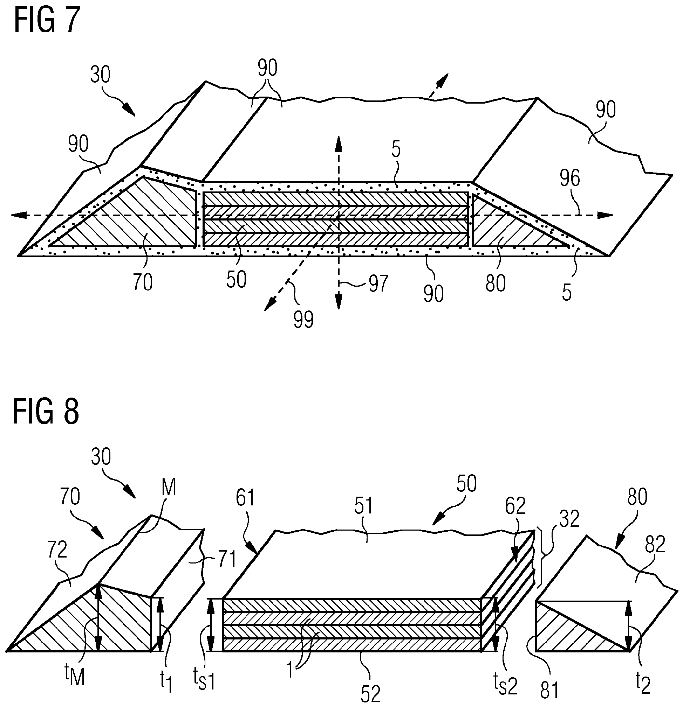

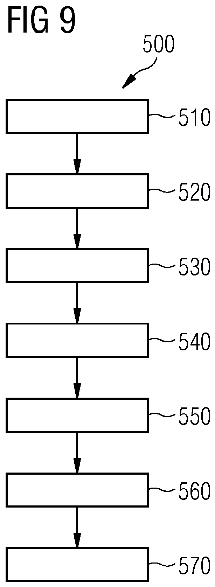

In the wind turbine 100, one or more of the blades 10 include one or more spar cap assembly 30 according to the present technique. The spar cap assembly 30 of the present technique has been explained hereinafter with reference to FIGs 7 to 11, in combination with FIGs 1 and 2. The technique also presents a method 500 for making such a spar cap assembly 30 as shown in FIG 9. It may be noted that the rotor blade 10 of the present technique differs from the conventionally known rotor blade 210 as shown in FIG 3 only for the spar cap assembly 30, and other components of the rotor blade 10 are same as described hereinabove with reference to FIG 3 for the conventional blade 210, for example the web 34, the leeward and windward shells 21a, 21b, etc. The difference between the present technique as compared to the conventionally known techniques is in the spar cap assembly 30 compared to the conventional spar cap 230.

FIGs 7 and 8 show an exemplary embodiment of the spar cap assembly 30, hereinafter also referred to as the assembly 30, of the present technique. The spar cap assembly 30 is an integral structure, or in other words is formed in one-part. The spar cap assembly 30 is pre-formed or pre-fabricated for the purpose of incorporating or embedding into the shell 21 of the wind turbine rotor blade 10 during manufacturing of the wind turbine rotor blade 10. The spar cap assembly 30 includes a spar cap section 50, a first ramp section 70, a second ramp section 80 and one or more wrapping layers 90 within which the spar cap section 50, the first ramp section 70 and the second ramp section 80 are encapsulated by resin injection molding, i.e. are held together by resin 5. FIG 8 shows the assembly 30 without the wrapping layer 90 and without the resin 5, for purposes of explanation.

The spar cap section 50 includes a composite material, such as a glass-fiber composite, a carbon-fiber composite, an aramid-fiber composite and a basalt-fiber composite.

The spar cap section 50 may be formed by sub-components for example by pultruded strips 1 as shown in FIG 8. The pultruded strips 1, hereinafter also referred to as the strip 1, are pultruded unidirectional fibrous composite strips. The strip(s) 1, depicted in FIG 8 are pultruded strip of composite material having unidirectional fibers (UD) reinforcement i.e. the strips 1 have structural fibers, generally longitudinally running along the strip 1, and hence unidirectional, made of glass, carbon, aramid and/or basalt, while the matrix that keeps the fibers together in the strip 1 and protects the fibers from external agents may be, but not limited to, epoxy, vinylester, polyurethane, polyester, etc. Each of the strips 1 are formed by pultrusion, a continuous process similar to extrusion, in which fibers e.g. glass-fibers or carbon-fibers are pulled through a supply of liquid resin i.e. through the material of the matrix that keeps the fibers together, and through dies that shape the strip 1. The resin i.e. the matrix material is then cured, for example by heating in an open chamber, or by employing heated dies that cure the resin as the strip 1 is pultruded.

The strips 1 are used to form the spar cap section 50 of FIG 8 by stacking the strips 1 with one or more similar strips 1 to form the spar cap section 50 of the assembly 30. As shown in FIG 7, the spar cap section 50 has a longitudinal axis 99 extending generally in the direction in which the strips 1 were pultruded when manufactured, and which is also the direction along which the fibers (not shown) of the strip 1 extend. The spar cap section 50 has a first face 51 and a second face 52 opposite to the first face 51, and a first lateral side 61 and a second lateral side 62 opposite to the first lateral side 61. The spar cap section 50 has a substantially constant cross-section, i.e. the spar cap section 50 maintains its cross-sectional shape and dimensions at positions along the longitudinal axis 99. The spar cap section 50 is defined by the first and the second mutually opposed and longitudinally extending faces 51, 52 and by the first and the second longitudinal extending lateral sides 61, 62 i.e. the faces 51, 52 and the sides 61, 62 extend generally parallelly to the longitudinal axis 99 of the spar cap section 50.

The spar cap section 50 has three mutually perpendicular axes - the longitudinal axis 99, a vertical axis 97 and a transverse axis 96. With respect to the spar cap assembly 30 or the spar cap section 50 or the first ramp section 70 or the second ramp section 80, the term 'longitudinally' means along the longitudinal axis 99 or parallel to the longitudinal axis 99. Similarly, with respect to the spar cap assembly 30 or the spar cap section 50 or the first ramp section 70 or the second ramp section 80, the term 'vertically' and the term 'transversally' or 'horizontally' means along the vertical axis 97 or parallel to the vertical axis 97 and along the transverse axis 96 or parallel to the transverse axis 96, respectively.

The spar cap section 50 has longitudinally extending slab shape which results from the stacking of the strips 1 to form a stack 32 of the strips 1, as shown in FIG 8. The separation between the first and second faces 51, 52 defines thickness of the spar cap section 50. The first and the second faces 51,52 of the spar cap section 50 are generally planar surfaces that are vertically separated, whereas the first and the second lateral sides 61, 62 are transversely separated. The first and the second faces 51, 52 of the spar cap section 50 may also be non-planar for example curved surfaces.

The first ramp section 70, hereinafter also referred to as the first ramp 70, extends longitudinally and is positioned adjoining the first lateral side 61 of the spar cap section 50, hereinafter also referred to as the section 50. The first ramp 70 has mutually opposed spar cap side 71 and sloped side 72, as schematically depicted in FIG 8. The spar cap side 71 of the first ramp 70 adjoins or lies next to or is in contact with the first lateral side 61 of the spar cap section 50. The spar cap side 71 of the first ramp 70 has a thickness t₁ substantially equal to the thickness t_{S1} of the first lateral side 61 of the spar cap section 50. In another exemplary embodiment of the assembly 30, the spar cap side 71 of the first ramp 70 has the thickness t₁ equal to the thickness t_{S1} of the first lateral side 61 of the spar cap section 50.

It may be noted that first ramp section 70, in a non-depicted embodiment may include a constant thickness area for the part of the first ramp section 70 between the spar cap side 71 and the sloped side 72, i.e. the ramp section 70 does not increase in thickness and immediately decreases in thickness after reaching the maximum thickness as is depicted in FIG 7 but instead the first ramp section 70 maintains the thickness for a certain limited length before decreasing in thickness at the sloped side 72.

The sloped side 72 of the first ramp 70 slopes outward with respect to the spar cap section 50. As depicted in the embodiment of FIG 8, the first ramp 70 further includes a mid-section M having a thickness t_{M} greater than the thickness t₁ of the spar cap side 71 of the first ramp 70. Thus the first ramp 70 when transitioning from the spar cap side 71 towards the sloped side 72 increases in thickness and this makes the first ramp 70 suitable to be assembled with panels that are thicker than the spar cap section 50, for example the thick panel 221a as shown in FIG 3. Alternatively, in a non-depicted exemplary embodiment of the assembly 30, the mid-section M of the first ramp 70 has a thickness t_{M} equal to the thickness t₁ of the spar cap side 71 of the first ramp 70, or in other words the first ramp 70 has a trapezoidal cross-section when sectioned normally to the longitudinal axis 99.

The second ramp section 80, hereinafter also referred to as the second ramp 80, extends longitudinally and is positioned adjoining or in contact with or next to the second lateral side 62 of the spar cap section 50. The second ramp 80 has spar cap side 81 and sloped side 82. As shown in FIG 8, the spar cap side 81 of the second ramp 80 adjoins the second lateral side 62 of the spar cap section 50 and has a thickness t₂ substantially equal to the thickness t_{S2} of the second lateral side 62 of the spar cap section 50. Alternatively, in another exemplary embodiment of the assembly 30, the spar cap side 81 of the second ramp 80 the thickness t₂ equal to the thickness t_{S2} of the second lateral side 62 of the spar cap section 50. The sloped side 82 of the second ramp 80 slopes outward with respect to the spar cap section 50 as depicted in FIG 8. The second ramp 80, in an exemplary embodiment of the assembly 30 has a triangular cross-section when sectioned normally to the longitudinal axis 99, in other words the second ramp 80 has a triangular prism shape for example a right triangular prism shape as shown in FIG 8.

All the aforementioned thicknesses i.e. t₁, t₂, t_{M}, t_{S1}, and t_{S2} are measured along or parallel to the vertical axis 97 of the spar cap section 50.

The first ramp 70 and/or the second ramp 80 are made from at least one of balsa wood, a honeycomb-core material and a foam-core material, and preferably are made from the same material which would later be used as core material for forming the shell 21 of the blade 10, or from the same material from which the panels 221a, 221b which the assembly 30 will be arranged with are made of. The materials used for making the first ramp 70 and/or the second ramp 80 can be shaped in accordance with the present technique by various method that are known in the art of making spar caps and panels for wind turbine rotor blades 10, for example by machining.

The wrapping layer 90 may be one or more layers that covers or encapsulates either completely or substantially the spar cap section 50, the first ramp 70 and the second ramp 80. The wrapping layers 90 may be made of the same material of which the layers 290 that form the skins of the shell 21 are made of. For example the wrapping layers 90 may be composite fabrics having structural fibers made of glass, carbon, aramid and/or basalt, while the matrix that keeps the fibers together in the fabric and protects the fibers from external agents may be, but not limited to, epoxy, vinylester, polyurethane, polyester, etc.

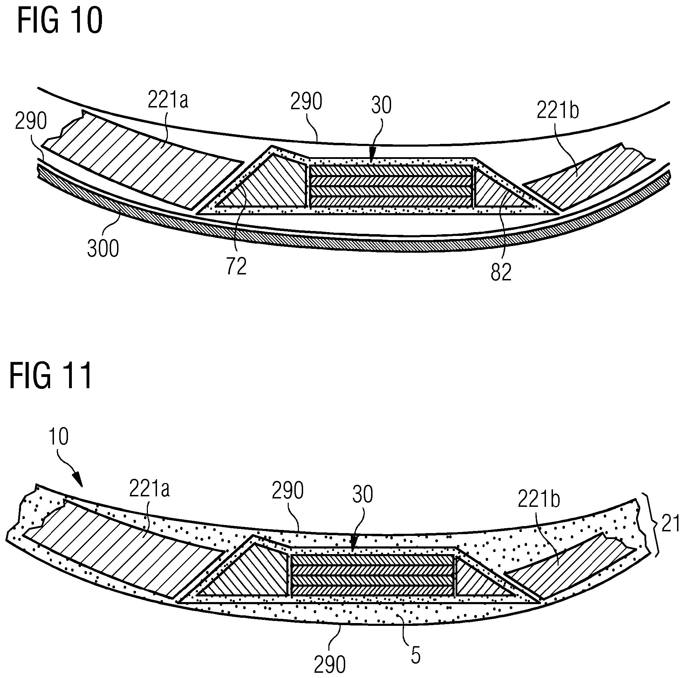

FIGs 10 and 11 schematically depict the preformed or prefabricated or pre-manufactured spar cap assembly 30 i.e. the one-part assembly 30 as shown in FIG 7 being incorporated in and as embedded in the blade 10, respectively. As shown in FIGs 10 and 11, owing to the sloped sides 72,82 of the first and the second ramps 70, 80 of the assembly 30 the position tolerance of the assembly 30 has increased as compared to the conventional assembly depicted in FIG 5. The sloped sides 72, 82 are assembled with similarly shaped, i.e. sloped edges of panels 221a, 221b in a preferable embodiment of the wind turbine rotor blade 10 as depicted in FIG 10. Furthermore, due to increased thickness of the first ramp 70, the assembly 30 is suitably coupled with or arranged with the thick ramp 221a. Also, the sloped side 82 of the assembly 30 ensures that the interface of the assembly 30 with the thin panel 221b is gradual. Due to the aforementioned features of the assembly 30 resulting from the sloped sides 72,82 and from the substantially equal, or equal thickness of the spar cap sides 71, 72 of the first and the second ramps 70, 80 compared to the thickness of the spar cap section 50, the transition of within the shell 21 from one of the panels 221a, 221b to the assembly 30 and then to the other of the panels 221a, 221b is gradual and devoid of sharp curvature changes and gaps, and thus risk of development and/or propagation of longitudinal wrinkles in the shell 21 of the blade 10 is reduced or obviated as shown in FIG 11.

It may be noted that although in the stack 32 of FIG 8 only four strips 1 are depicted, in general the number of strips 1 in the stack 32 may be greater, for example between five and twelve, or more. The number of strips 1 to be stacked to form the spar cap section 50 of the assembly 30 depends on numerous factors for example, thickness of the strips 1, desired thickness of the spar cap section 50, etc.

Hereinafter the method 500 for making or manufacturing the spar cap assembly 30 has been explained with reference to flow chart of FIG 9 in combination with FIGs 7 and 8. In the method 500, in a step 510 one or more wrapping layers 90 are spread in a resin injection mould. The resin injection mould is a mould for making the spar cap assembly 30 of first aspect of the present technique, and not the mould in which the blade is manufactured i.e. the resin injection mould for used for manufacturing of the assembly 1 according to the method 500 is not the blade mould 300 depicted in FIGs 5 and 10. The one or more wrapping layers 90 are same as described hereinabove with respect to FIGs 7 and 8, for example one of glass-fiber reinforced fabric, carbon-fiber reinforced fabric, aramid-fiber reinforced fabric and basalt-fiber reinforced fabric. Thereafter in the method 500, in a step 520 the stack 32 of the strips 1 is placed in the resin injection mould atop the spread wrapping layers 90. In an embodiment of the method 500, the strips 1 may be placed individually in the resin injection mould and the stack 32 may be formed by placing such strips 1, i.e. the strips 1 are not yet bonded to one another. In this embodiment the strips 1 are bonded to one another during the method 500. Alternatively, the stack 32 may be pre-formed by the strips 1 that are bonded to one another, for example by resin injection process previously performed only for the strips 1 to form the stack 32, before being places in the resin injection mould, and thus the stack 32 is already in form of the spar cap section 50 as described in reference to FIGs 7 and 8.

The strips 1 are as described hereinabove in reference to FIGs 7 and 8. The stack 32 basically forms the spar cap section 50 of the spar cap assembly 30 either during the method 500 or separately from the method 500. Thus, the stack 32, similar to the spar cap section 50, is defined by first and second mutually opposed and longitudinally extending faces 51, 52 and by first and second longitudinally extending lateral sides 61, 62.

In the method 500, after the step 520 a step 530 and a step 540 are performed either simultaneously or subsequently, i.e. the steps 530 and 540 are performed together or the step 530 is performed before or after the step 540. In the step 530 of the method 500 and in the step 540 of the method 500, the first ramp 70 and the second ramp 80 are placed in the resin injection mould atop the wrapping layers 90 adjoining the first lateral side 61 and the second lateral side 62 of the stack 32, respectively. The first and the second ramp sections 70, 80 are same as described hereinabove with respect to FIGs 7 and 8.

In the method 500, thereafter in a step 550 the stack 32 or the section 50, the first ramp 70 and the second ramp 80 are encapsulated by the wrapping layers 90 placed previously in the resin injection mould, or by spreading one or more additional wrapping layers, similar to the wrapping layers 90, atop the stack 32 or the section 50 and the first and the second ramps 70,80 such that the additional wrapping layers along with the previously spread wrapping layers 90 encapsulate the stack 32, the first ramp 70 and the second ramp 80. The one or more additional wrapping layers is one of glass-fiber reinforced fabric, carbon-fiber reinforced fabric, aramid-fiber reinforced fabric and basalt-fiber reinforced fabric. Subsequently in the method 500, in a step 560 resin is supplied to and caused to infiltrate the stack 32, the first and the second ramps 70, 80 the wrapping layers 90, and the additional wrapping layers if present. The resin flow may be achieved by Vacuum Assisted Resin Transfer Molding (VARTM) process. Finally, in the method 500 in a step 570, the resin is cured to mutually bond the stack 32, the first and the second ramps 70,80, the wrapping layers 90, and the additional wrapping layers if present.

As aforementioned it may be noted that the stack 32 may include mutually bound strips 1 when being placed in the resin injection mould in the step 520 or alternatively, the stack 32 may have unbound strips 1 when being placed in the resin injection mould in the step 520. In the formed scenario i.e. when the stack 32 includes mutually bound strips 1, the spar cap section 50 is pre-formed when being placed in the resin injection mould in the step 520. In the later scenario i.e. when the stack 32 includes unbound strips 1, the strips 1 are bound together by the resin supplied in the step 560 and cured in the step 570 of the method 500.

The mechanism and setup for the steps 560 and 570 i.e. of supplying and curing of the resin are conventionally known in the art of wind turbine blade manufacturing and thus not explained herein in further details for sake of brevity.

The present technique also presents a method for manufacturing a wind turbine rotor blade 10. The wind turbine rotor blade 10 is manufactured using a pair of pre-formed spar cap assembly 30 as described hereinabove with respect to FIG 7. The blade 10 may be manufactured using well known integral blade construction of Siemens, wherein the shell of the blade is formed in one-part as opposed to two half shells glued together in conventional blade manufacturing. In the method of the present technique using the integral blade construction, wrapping layers 90, also referred to as the facesheets or outer shell face sheets are spread on blade mould. Thereafter one of the pre-casted or pre-formed spar cap assembly 30 is positioned on the spread facesheets. Adjacent to the spar cap assembly 30 cores for the bottom part of the shell are positioned. Subsequently, inner shell facesheets are spread on the cores of the bottom parts of the shell and parts of the spar cap assembly 30. Thereafter the web and mandrels are positioned in the mold with respect to the spar cap assembly 30. The inner shell facesheets are wrapped around the mandrels. Thereafter the other of the spar cap assembly 30 is positioned on top of the inner shell facesheets. Then, the upper shell cores are placed into the blade mould adjacent to the spar cap assembly 30. Subsequently, outer shell facesheets are wrapped around the upper shell core and parts of the spar cap assembly 30. Then the blade mould is closed by placing the upper part of the blade mould on top of the lower part of the blade mould. Finally the vacuum is applied and resin is injected which is later cured to form the integral blade. The resin flow may be achieved by Vacuum Assisted Resin Transfer Molding (VARTM) process. The details of the formation of the integral blade are well known in the art and thus not described herein in further details for sake of brevity.

It may be noted that the spar cap assembly 30 of the present technique is used for the wind turbine blades 10 that have the so-called 'structural shell design' as shown in FIG 3 i.e. the spar cap assembly 30 is integrated or embedded within the structure of the shell 21, i.e. the outer shell 21.

## Claims

1. A spar cap assembly (30) for a wind turbine rotor blade (10), the spar cap assembly (30) comprising:
- a spar cap section (50) comprising a composite material, the spar cap section (50) having a longitudinally extending slab shape defined by first and second mutually opposed and longitudinally extending faces (51,52) and by first and second longitudinally extending lateral sides (61,62), the separation between the first and second faces (51,52) defining thickness of the spar cap section (50), the spar cap section (50) having a vertical axis (97) extending between the first and the second faces (51, 52) and a transverse axis (96) extending between the first and the second lateral sides (61,62), wherein a longitudinal axis (99), the vertical axis (97) and the transverse axis (96) are mutually perpendicular;
- a first ramp section (70) extending longitudinally and positioned adjoining the first lateral side (61) of the spar cap section (50), the first ramp section (70) having mutually opposed spar cap side (71) and sloped side (72), wherein the spar cap side (71) of the first ramp section (70) adjoins the first lateral side (61) of the spar cap section (50) and has a thickness (t₁) substantially equal to the thickness (t_{S1}) of the first lateral side (61) of the spar cap section (50), and wherein the sloped side (72) of the first ramp section (70) slopes outward with respect to the spar cap section (50), and wherein the first ramp section (70) further comprises a mid-section (M) having a thickness (t_{M}) equal to or greater than the thickness (t₁) of the spar cap side (71) of the first ramp section (70), the thicknesses (t₁,t_{M}) of the spar cap side (71) and the mid-section (M) of the first ramp section (70) measured parallel to the vertical axis (97) of the spar cap section (50);
- a second ramp section (80) extending longitudinally and positioned adjoining the second lateral side (62) of the spar cap section (50), the second ramp section (80) having spar cap side (81) and sloped side (82), wherein the spar cap side (81) of the second ramp section (80) adjoins the second lateral side (62) of the spar cap section (50) and has a thickness (t₂) substantially equal to the thickness (t_{S2}) of the second lateral side (62) of the spar cap section (50), and wherein the sloped side (82) of the second ramp section (80) slopes outward with respect to the spar cap section (50), the thickness (t₂) of the spar cap side (81) of the second ramp section (80) measured parallel to the vertical axis (97) of the spar cap section (50); and
- one or more wrapping layers (90) encapsulating the spar cap section (50), the first ramp section (70) and the second ramp section (80), wherein the one or more wrapping layers (90), the spar cap section (50), the first ramp section (70) and the second ramp section (80) are resin injection molded.

2. The spar cap assembly (30) according to claim 1, wherein the first ramp section (70) is trapezoidal in shape.

3. The spar cap assembly (30) according to claim 1 or 2, wherein the second ramp section (80) is a triangular prism in shape.

4. The spar cap assembly (30) according to any of claims 1 to 3, wherein the first ramp section (70) and/or the second ramp section (80) are made from at least one of balsa wood, a honeycomb-core material and a foam-core material.

5. The spar cap assembly (30) according to any of claims 1 to 4, wherein the composite material of the spar cap section (50) is at least one of a glass-fiber composite, a carbon-fiber composite, an aramid-fiber composite and a basalt-fiber composite.

6. The spar cap assembly (30) according to any of claims 1 to 5, wherein the spar cap section (50) comprises a stack (32) of pultruded strips (1).

7. The spar cap assembly (30) according to any of claims 1 to 6, wherein the one or more wrapping layers (90) is one of glass-fiber reinforced fabric, carbon-fiber reinforced fabric, aramid-fiber reinforced fabric and basalt-fiber reinforced fabric.

8. A wind turbine rotor blade (10) comprising at least one spar cap assembly (30) embedded in a shell (21) of the wind turbine rotor blade (10), wherein the spar cap assembly (30) is according to any of claims 1 to 7, and wherein the longitudinal axis (99) of the spar cap section (50) extends span-wise along the wind turbine rotor blade (10).

9. A wind turbine (100) comprising a wind turbine rotor blade (10), wherein the wind turbine rotor blade (10) is according to claim 8.

10. A method (500) for manufacturing a spar cap assembly (30) for a wind turbine rotor blade (10), the method (500) comprising:
- spreading (510) one or more wrapping layers (90) in a resin injection mould, wherein the one or more wrapping layers (90) is one of glass-fiber reinforced fabric, carbon-fiber reinforced fabric, aramid-fiber reinforced fabric and basalt-fiber reinforced fabric;
- placing (520), in the resin injection mould atop the wrapping layers (90), a plurality of strips (1) forming a slab shaped stack (32) of strips (1), the strips (1) comprising at least one of a glass-fiber composite, a carbon-fiber composite, an aramid-fiber composite and a basalt-fiber composite, the stack (32) defined by first and second mutually opposed and longitudinally extending faces (51,52) and by first and second longitudinally extending lateral sides (61,62), the separation between the first and second faces (51,52) defining thickness of the stack (32), the stack (32) having a vertical axis (97) extending between the first and the second faces (51, 52) and a transverse axis (96) extending between the first and the second lateral sides (61,62), wherein a longitudinal axis (99), the vertical axis (97) and the transverse axis (96) are mutually perpendicular;
- placing (530), in the resin injection mould atop the wrapping layers (90), a longitudinally extending first ramp section (70) adjoining the first lateral side (61) of the stack (32), the first ramp section (70) having mutually opposed spar cap side (71) and sloped side (72), wherein the spar cap side (71) of the first ramp section (70) is positioned adjoining the first lateral side (61) of the stack (32) and has a thickness (t₁) substantially equal to the thickness (t_{S1}) of the first lateral side (61) of the stack (32), and wherein the sloped side (72) of the first ramp section (70) slopes outward with respect to the stack (32) and wherein the first ramp section (70) further comprises a mid-section (M) having a thickness (t_{M}) equal to or greater than the thickness (t₁) of the spar cap side (71) of the first ramp section (70), the thicknesses (t₁,t_{M}) of the spar cap side (71) and the mid-section (M) of the first ramp section (70) measured parallel to the vertical axis (97) of the stack (32);
- placing (540), in the resin injection mould atop the wrapping layers (90), a longitudinally extending second ramp section (80) adjoining the second lateral side (62) of the stack (32), the second ramp section (80) having spar cap side (81) and sloped side (82), wherein the spar cap side (81) of the second ramp section (80) is positioned adjoining the second lateral side (62) of the stack (32) and has a thickness (t₂) substantially equal to the thickness (t_{S2}) of the second lateral side (62) of the stack (32), and wherein the sloped side (82) of the second ramp section (80) slopes outward with respect to the stack (32), the thickness (t₂) of the spar cap side (82) of the second ramp section (80) measured parallel to the vertical axis (97) of the stack (32); and
- encapsulating (550) the stack (32), the first ramp section (70) and the second ramp section (80) by the wrapping layers (90) placed previously in the resin injection mould, or spreading one or more additional wrapping layers atop the stack (32) and the first and the second ramp sections (70,80) such that the additional wrapping layers along with the previously spread wrapping layers (90) encapsulate the stack (32), the first ramp section (70) and the second ramp section (80), wherein the one or more additional wrapping layers is one of glass-fiber reinforced fabric, carbon-fiber reinforced fabric, aramid-fiber reinforced fabric and basalt-fiber reinforced fabric;
- supplying (560) resin and causing resin to infiltrate the stack (32), the first and the second ramp sections (70,80) and the wrapping layers (90) and the additional wrapping layers, if present; and
- curing (570) the resin to mutually bond the stack (32), the first and the second ramp sections (70,80), the wrapping layers (90), and the additional wrapping layers, if present.

11. The method (500) according to claim 10, wherein the first ramp section (70) is trapezoidal in shape.

12. The method (500) according to claim 10 or 11, wherein the second ramp section (80) is a triangular prism in shape.

13. The method (500) according to any of claims 10 to 12, wherein the first ramp section (70) and/or the second ramp section (80) are made from at least one of balsa wood, a honeycomb-core material and a foam-core material.

14. The method (500) according to any of claims 10 to 13, wherein the strips (1) are pultruded strips of composite material.

15. A method for manufacturing a wind turbine rotor blade (10), wherein the wind turbine rotor blade (10) is manufactured using a pre-formed spar cap assembly (30) according to any of claims 1 to 7.

## Patentansprüche

1. Holmgurtanordnung (30) für ein Windenergieanlagenrotorblatt (10), wobei die Holmgurtanordnung (30) Folgendes umfasst:
- einen Holmgurtabschnitt (50), der ein Verbundmaterial umfasst, wobei der Holmgurtabschnitt (50) eine sich in Längsrichtung erstreckende Plattenform aufweist, die durch erste und zweite einander gegenüberliegende und sich in Längsrichtung erstreckende Flächen (51, 52) und durch erste und zweite sich in Längsrichtung erstreckende laterale Seiten (61, 62) definiert ist, wobei der Abstand zwischen den ersten und zweiten Flächen (51, 52) die Dicke des Holmgurtabschnitts (50) definiert, wobei der Holmgurtabschnitt (50) eine vertikale Achse (97), die sich zwischen den ersten und den zweiten Flächen (51, 52) erstreckt, und eine Querachse (96), die sich zwischen den ersten und den zweiten lateralen Seiten (61, 62) erstreckt, aufweist, wobei eine Längsachse (99), die vertikale Achse (97) und die Querachse (96) senkrecht zueinander sind;
- einen ersten Rampenabschnitt (70), der sich in Längsrichtung erstreckt und angrenzend an die erste laterale Seite (61) des Holmgurtabschnitts (50) positioniert ist, wobei der erste Rampenabschnitt (70) eine Holmgurtseite (71) und eine geneigte Seite (72) aufweist, die einander gegenüberliegen, wobei die Holmgurtseite (71) des ersten Rampenabschnitts (70) an die erste laterale Seite (61) des Holmgurtabschnitts (50) angrenzt und eine Dicke (t₁) aufweist, die im Wesentlichen gleich der Dicke (t_{S1}) der ersten lateralen Seite (61) des Holmgurtabschnitts (50) ist, und wobei sich die geneigte Seite (72) des ersten Rampenabschnitts (70) in Bezug auf den Holmgurtabschnitt (50) nach außen neigt, und wobei der erste Rampenabschnitt (70) ferner einen mittleren Abschnitt (M) umfasst, der eine Dicke (t_{M}) aufweist, die gleich oder größer als die Dicke (t₁) der Holmgurtseite (71) des ersten Rampenabschnitts (70) ist, wobei die Dicken (t₁, t_{M}) der Holmgurtseite (71) und des mittleren Abschnitts (M) des ersten Rampenabschnitts (70) parallel zu der vertikalen Achse (97) des Holmgurtabschnitts (50) gemessen sind;
- einen zweiten Rampenabschnitt (80), der sich in Längsrichtung erstreckt und angrenzend an die zweite laterale Seite (62) des Holmgurtabschnitts (50) positioniert ist, wobei der zweite Rampenabschnitt (80) eine Holmgurtseite (81) und eine geneigte Seite (82) aufweist, wobei die Holmgurtseite (81) des zweiten Rampenabschnitts (80) an die zweite laterale Seite (62) des Holmgurtabschnitts (50) angrenzt und eine Dicke (t₂) aufweist, die im Wesentlichen gleich der Dicke (t_{S2}) der zweiten laterale Seite (62) des Holmgurtabschnitts (50) ist, und wobei sich die geneigte Seite (82) des zweiten Rampenabschnitts (80) in Bezug auf den Holmgurtabschnitt (50) nach außen neigt, wobei die Dicke (t₂) der Holmgurtseite (81) des zweiten Rampenabschnitts (80) parallel zu der vertikalen Achse (97) des Holmgurtabschnitts (50) gemessen ist; und
- eine oder mehrere Umhüllungsschichten (90), die den Holmgurtabschnitt (50), den ersten Rampenabschnitt (70) und den zweiten Rampenabschnitt (80) einkapseln, wobei die eine oder mehreren Umhüllungsschichten (90), der Holmgurtabschnitt (50), der erste Rampenabschnitt (70) und der zweite Rampenabschnitt (80) harzspritzgegossen sind.

2. Holmgurtanordnung (30) nach Anspruch 1, wobei der erste Rampenabschnitt (70) eine Trapezform aufweist.

3. Holmgurtanordnung (30) nach Anspruch 1 oder 2, wobei der zweite Rampenabschnitt (80) die Form eines dreieckigen Prismas aufweist.

4. Holmgurtanordnung (30) nach einem der Ansprüche 1 bis 3, wobei der erste Rampenabschnitt (70) und/oder der zweite Rampenabschnitt (80) aus mindestens einem von Balsaholz, einem Wabenkernmaterial und einem Schaumkernmaterial bestehen.

5. Holmgurtanordnung (30) nach einem der Ansprüche 1 bis 4, wobei das Verbundmaterial des Holmgurtabschnitts (50) mindestens eines von einem Glasfaserverbundstoff, einem Kohlenstofffaserverbundstoff, einem Aramidfaserverbundstoff und einem Basaltfaserverbundstoff ist.

6. Holmgurtanordnung (30) nach einem der Ansprüche 1 bis 5, wobei der Holmgurtabschnitt (50) einen Stapel (32) aus stranggezogenen Streifen (1) umfasst.

7. Holmgurtanordnung (30) nach einem der Ansprüche 1 bis 6, wobei die eine oder mehreren Umhüllungsschichten (90) eines von glasfaserverstärktem Gewebe, kohlenstofffaserverstärktem Gewebe, aramidfaserverstärktem Gewebe und basaltfaserverstärktem Gewebe ist.

8. Windenergieanlagenrotorblatt (10), das mindestens eine Holmgurtanordnung (30) umfasst, die in eine Schale (21) des Windenergieanlagenrotorblatts (10) eingebettet ist, wobei die Holmgurtanordnung (30) nach einem der Ansprüche 1 bis 7 ist, und wobei sich die Längsachse (99) des Holmgurtabschnitts (50) in Spannweitenrichtung entlang des Windenergieanlagenrotorblatts (10) erstreckt.

9. Windenergieanlage (100), die ein Windenergieanlagenrotorblatt (10) umfasst, wobei das Windenergieanlagenrotorblatt (10) nach Anspruch 8 ist.

10. Verfahren (500) zum Herstellen einer Holmgurtanordnung (30) für ein Windenergieanlagenrotorblatt (10), wobei das Verfahren (500) Folgendes umfasst:
- Verteilen (510) einer oder mehrerer Umhüllungsschichten (90) in einer Harzspritzgussform, wobei die eine oder mehreren Umhüllungsschichten (90) eines von glasfaserverstärktem Gewebe, kohlenstofffaserverstärktem Gewebe, aramidfaserverstärktem Gewebe und basaltfaserverstärktem Gewebe ist;
- Platzieren (520), in der Harzspritzgussform auf den Umhüllungsschichten (90), einer Mehrzahl von Streifen (1), die einen plattenförmigen Stapel (32) von Streifen (1) bilden, wobei die Streifen (1) mindestens einen von einem Glasfaserverbundstoff, einem Kohlenstofffaserverbundstoff, einem Aramidfaserverbundstoff und einem Basaltfaserverbundstoff umfassen, wobei der Stapel (32) durch erste und zweite einander gegenüberliegende und sich in Längsrichtung erstreckende Flächen (51, 52) und durch erste und zweite sich in Längsrichtung erstreckende laterale Seiten (61, 62) definiert ist, wobei der Abstand zwischen den ersten und zweiten Flächen (51, 52) die Dicke des Stapels (32) definiert, wobei der Stapel (32) eine vertikale Achse (97), die sich zwischen den ersten und den zweiten Flächen (51, 52) erstreckt, und eine Querachse (96), die sich zwischen den ersten und den zweiten lateralen Seiten (61, 62) erstreckt, aufweist, wobei eine Längsachse (99), die vertikale Achse (97) und die Querachse (96) senkrecht zueinander sind;
- Platzieren (530), in der Harzspritzgussform auf den Umhüllungsschichten (90), eines sich in Längsrichtung erstreckenden ersten Rampenabschnitts (70), der an die erste laterale Seite (61) des Stapels (32) angrenzt, wobei der erste Rampenabschnitt (70) eine Holmgurtseite (71) und eine geneigte Seite (72) aufweist, die einander gegenüberliegen, wobei die Holmgurtseite (71) des ersten Rampenabschnitts (70) angrenzend an die erste laterale Seite (61) des Stapels (32) positioniert ist und eine Dicke (t₁) aufweist, die im Wesentlichen gleich der Dicke (t_{S1}) der ersten lateralen Seite (61) des Stapels (32) ist, und wobei sich die geneigte Seite (72) des ersten Rampenabschnitts (70) in Bezug auf den Stapel (32) nach außen neigt und wobei der erste Rampenabschnitt (70) ferner einen mittleren Abschnitt (M) umfasst, der eine Dicke (t_{M}) aufweist, die gleich oder größer als die Dicke (t₁) der Holmgurtseite (71) des ersten Rampenabschnitts (70) ist, wobei die Dicken (t₁, t_{M}) der Holmgurtseite (71) und des mittleren Abschnitts (M) des ersten Rampenabschnitts (70) parallel zu der vertikalen Achse (97) des Stapels (32)gemessen werden;
- Platzieren (540), in der Harzspritzgussform auf den Umhüllungsschichten (90), eines sich in Längsrichtung erstreckenden zweiten Rampenabschnitts (80), der an die zweite laterale Seite (62) des Stapels (32) angrenzt, wobei der zweite Rampenabschnitt (80) eine Holmgurtseite (81) und eine geneigte Seite (82) aufweist, wobei die Holmgurtseite (81) des zweiten Rampenabschnitts (80) angrenzend an die zweite laterale Seite (62) des Stapels (32) positioniert ist und eine Dicke (t₂) aufweist, die im Wesentlichen gleich der Dicke (t_{S2}) der zweiten lateralen Seite (62) des Stapels (32) ist, und wobei sich die geneigte Seite (82) des zweiten Rampenabschnitts (80) in Bezug auf den Stapel (32) nach außen neigt, wobei die Dicke (t₂) der Holmgurtseite (82) des zweiten Rampenabschnitts (80) parallel zu der vertikalen Achse (97) des Stapels (32) gemessen wird; und
- Einkapseln (550) des Stapels (32), des ersten Rampenabschnitts (70) und des zweiten Rampenabschnitts (80) durch die Umhüllungsschichten (90), die zuvor in der Harzspritzgussform platziert wurden, oder Verteilen einer oder mehrerer zusätzlicher Umhüllungsschichten auf dem Stapel (32) und den ersten und den zweiten Rampenabschnitten (70, 80) derart, dass die zusätzlichen Umhüllungsschichten zusammen mit den zuvor verteilten Umhüllungsschichten (90) den Stapel (32), den ersten Rampenabschnitt (70) und den zweiten Rampenabschnitt (80) einkapseln, wobei die eine oder mehreren zusätzlichen Umhüllungsschichten eines von glasfaserverstärktem Gewebe, kohlenstofffaserverstärktem Gewebe, aramidfaserverstärktem Gewebe und basaltfaserverstärktem Gewebe ist;
- Zuführen (560) von Harz und Bewirken, dass Harz in den Stapel (32), die ersten und die zweiten Rampenabschnitte (70, 80) und die Umhüllungsschichten (90) und die zusätzlichen Umhüllungsschichten, falls vorhanden, eindringt; und
- Aushärten (570) des Harzes, um den Stapel (32), die ersten und zweiten Rampenabschnitte (70, 80), die Umhüllungsschichten (90) und die zusätzlichen Umhüllungsschichten, falls vorhanden, miteinander zu verbinden.

11. Verfahren (500) nach Anspruch 10, wobei der erste Rampenabschnitt (70) eine Trapezform aufweist.

12. Verfahren (500) nach Anspruch 10 oder 11, wobei der zweite Rampenabschnitt (80) die Form eines dreieckigen Prismas aufweist.

13. Verfahren (500) nach einem der Ansprüche 10 bis 12, wobei der erste Rampenabschnitt (70) und/oder der zweite Rampenabschnitt (80) aus mindestens einem von Balsaholz, einem Wabenkernmaterial und einem Schaumkernmaterial bestehen.

14. Verfahren (500) nach einem der Ansprüche 10 bis 13, wobei die Streifen (1) stranggezogene Streifen aus Verbundmaterial sind.

15. Verfahren zum Herstellen eines Windenergieanlagenrotorblatts (10), wobei das Windenergieanlagenrotorblatt (10) unter Verwendung einer vorgeformten Holmgurtanordnung (30) nach einem der Ansprüche 1 bis 7 hergestellt wird.

## Revendications

1. Ensemble de semelle de longeron (30) pour une pale de rotor d'éolienne (10), l'ensemble de semelle de longeron (30) comprenant :
- une section de semelle de longeron (50) comprenant un matériau composite, la section de semelle de longeron (50) ayant une forme de dalle s'étendant longitudinalement définie par des première et deuxième faces mutuellement opposées et s'étendant longitudinalement (51, 52) et par des premier et deuxième côtés latéraux s'étendant longitudinalement (61, 62), la séparation entre les première et deuxième faces (51, 52) définissant l'épaisseur de la section de semelle de longeron (50), la section de semelle de longeron (50) ayant un axe vertical (97) s'étendant entre les première et deuxième faces (51, 52) et un axe transversal (96) s'étendant entre les premier et deuxième côtés latéraux (61, 62), dans lequel un axe longitudinal (99), l'axe vertical (97) et l'axe transversal (96) sont mutuellement perpendiculaires ;
- une première section de rampe (70) s'étendant longitudinalement et positionnée de manière à jouxter le premier côté latéral (61) de la section de semelle de longeron (50), la première section de rampe (70) ayant un côté de semelle de longeron (71) et un côté incliné (72) mutuellement opposés, dans lequel le côté de semelle de longeron (71) de la première section de rampe (70) jouxte le premier côté latéral (61) de la section de semelle de longeron (50) et a une épaisseur (t₁) sensiblement égale à l'épaisseur (t_{S1}) du premier côté latéral (61) de la section de semelle de longeron (50), et dans lequel le côté incliné (72) de la première section de rampe (70) est incliné vers l'extérieur par rapport à la section de semelle de longeron (50), et dans lequel la première section de rampe (70) comprend en outre une section médiane (M) ayant une épaisseur (t_{M}) supérieure ou égale à l'épaisseur (t₁) du côté de semelle de longeron (71) de la première section de rampe (70), les épaisseurs (t₁, t_{M}) du côté de semelle de longeron (71) et de la section médiane (M) de la première section de rampe (70) étant mesurées parallèlement à l'axe vertical (97) de la section de semelle de longeron (50) ;
- une deuxième section de rampe (80) s'étendant longitudinalement et positionnée de manière à jouxter le deuxième côté latéral (62) de la section de semelle de longeron (50), la deuxième section de rampe (80) ayant un côté de semelle de longeron (81) et un côté incliné (82), dans lequel le côté de semelle de longeron (81) de la deuxième section de rampe (80) jouxte le deuxième côté latéral (62) de la section de semelle de longeron (50) et a une épaisseur (t₂) sensiblement égale à l'épaisseur (t_{S2}) du deuxième côté latéral (62) de la section de semelle de longeron (50), et dans lequel le côté incliné (82) de la deuxième section de rampe (80) est incliné vers l'extérieur par rapport à la section de semelle de longeron (50), l'épaisseur (t₂) du côté de semelle de longeron (81) de la deuxième section de rampe (80) étant mesurée parallèlement à l'axe vertical (97) de la section de semelle de longeron (50) ; et
- une ou plusieurs couches d'enveloppement (90) encapsulant la section de semelle de longeron (50), la première section de rampe (70) et la deuxième section de rampe (80), dans lequel la ou les plusieurs couches d'enveloppement (90), la section de semelle de longeron (50), la première section de rampe (70) et la deuxième section de rampe (80) sont moulées par injection de résine.

2. Ensemble de semelle de longeron (30) selon la revendication 1, dans lequel la première section de rampe (70) est de forme trapézoïdale.

3. Ensemble de semelle de longeron (30) selon la revendication 1 ou 2, dans lequel la deuxième section de rampe (80) est en forme de prisme triangulaire.

4. Ensemble de semelle de longeron (30) selon l'une des revendications 1 à 3, dans lequel la première section de rampe (70) et/ou la deuxième section de rampe (80) est/sont réalisée(s) à partir d'au moins l'un parmi le bois de balsa, un matériau d'âme en nid d'abeilles et un matériau d'âme en mousse.

5. Ensemble de semelle de longeron (30) selon l'une des revendications 1 à 4, dans lequel le matériau composite de la section de semelle de longeron (50) est au moins l'un parmi un composite de fibres de verre, un composite de fibres de carbone, un composite de fibres d'aramide et un composite de fibres de basalte.

6. Ensemble de semelle de longeron (30) selon l'une des revendications 1 à 5, dans lequel la section de semelle de longeron (50) comprend un empilement (32) de bandes pultrudées (1) .

7. Ensemble de semelle de longeron (30) selon l'une des revendications 1 à 6, dans lequel la ou les plusieurs couches d'enveloppement (90) sont l'une parmi un tissu renforcé de fibres de verre, un tissu renforcé de fibres de carbone, un tissu renforcé de fibres d'aramide et un tissu renforcé de fibres de basalte.

8. Pale de rotor d'éolienne (10) comprenant au moins un ensemble de semelle de longeron (30) intégré dans une coque (21) de la pale de rotor d'éolienne (10), dans laquelle l'ensemble de semelle de longeron (30) est conforme à l'une des revendications 1 à 7, et dans laquelle l'axe longitudinal (99) de la section de semelle de longeron (50) s'étend dans le sens de l'envergure le long de la pale de rotor d'éolienne (10).

9. Éolienne (100) comprenant une pale de rotor d'éolienne (10), dans laquelle la pale de rotor d'éolienne (10) est conforme à la revendication 8.

10. Procédé (500) de fabrication d'un ensemble de semelle de longeron (30) pour une pale de rotor d'éolienne (10), le procédé (500) comprenant :
- étaler (510) une ou plusieurs couches d'enveloppement (90) dans un moule d'injection de résine, dans lequel la ou les plusieurs couches d'enveloppement (90) sont l'un parmi un tissu renforcé de fibres de verre, un tissu renforcé de fibres de carbone, un tissu renforcé de fibres d'aramide et un tissu renforcé de fibres de basalte ;
- placer (520), dans le moule d'injection de résine au-dessus des couches d'enveloppement (90), une pluralité de bandes (1) formant un empilement en forme de dalle (32) de bandes (1), les bandes (1) comprenant au moins l'un parmi un composite de fibres de verre, un composite de fibres de carbone, un composite de fibres d'aramide et un composite de fibres de basalte, l'empilement (32) étant défini par des première et deuxième faces mutuellement opposées et s'étendant longitudinalement (51, 52) et par des premier et deuxième côtés latéraux s'étendant longitudinalement (61, 62), la séparation entre les première et deuxième faces (51, 52) définissant l'épaisseur de l'empilement (32), l'empilement (32) ayant un axe vertical (97) s'étendant entre les première et deuxième faces (5l, 52) et un axe transversal (96) s'étendant entre les premier et deuxième côtés latéraux (61, 62), dans lequel un axe longitudinal (99), l'axe vertical (97) et l'axe transversal (96) sont mutuellement perpendiculaires ;
- placer (530), dans le moule d'injection de résine au-dessus des couches d'enveloppement (90), une première section de rampe s'étendant longitudinalement (70) jouxtant le premier côté latéral (61) de l'empilement (32), la première section de rampe (70) ayant un côté de semelle de longeron (71) et un côté incliné (72) mutuellement opposés, dans lequel le côté de semelle de longeron (71) de la première section de rampe (70) est positionné de manière à jouxter le premier côté latéral (61) de l'empilement (32) et a une épaisseur (t₁) sensiblement égale à l'épaisseur (t_{S1}) du premier côté latéral (61) de l'empilement (32), et dans lequel le côté incliné (72) de la première section de rampe (70) est incliné vers l'extérieur par rapport à l'empilement (32) et dans lequel la première section de rampe (70) comprend en outre une section médiane (M) ayant une épaisseur (t_{M}) supérieure ou égale à l'épaisseur (t₁) du côté de semelle de longeron (71) de la première section de rampe (70), les épaisseurs (t₁, t_{M}) du côté de semelle de longeron (71) et de la section médiane (M) de la première section de rampe (70) étant mesurées parallèlement à l'axe vertical (97) de l'empilement (32) ;
- placer (540), dans le moule d'injection de résine au-dessus des couches d'enveloppement (90), une deuxième section de rampe s'étendant longitudinalement (80) jouxtant le deuxième côté latéral (62) de l'empilement (32), la deuxième section de rampe (80) ayant un côté de semelle de longeron (81) et un côté incliné (82), dans lequel le côté de semelle de longeron (81) de la deuxième section de rampe (80) est positionné de manière à jouxter le deuxième côté latéral (62) de l'empilement (32) et a une épaisseur (t₂) sensiblement égale à l'épaisseur (t_{S2}) du deuxième côté latéral (62) de l'empilement (32), et dans lequel le côté incliné (82) de la deuxième section de rampe (80) est incliné vers l'extérieur par rapport à l'empilement (32), l'épaisseur (t₂) du côté de semelle de longeron (82) de la deuxième section de rampe (80) étant mesurée parallèlement à l'axe vertical (97) de l'empilement (32) ; et
- encapsuler (550) l'empilement (32), la première section de rampe (70) et la deuxième section de rampe (80) par les couches d'enveloppement (90) placées précédemment dans le moule d'injection de résine, ou étaler une ou plusieurs couches d'enveloppement supplémentaires au-dessus de l'empilement (32) et des première et deuxième sections de rampe (70, 80) de sorte que les couches d'enveloppement supplémentaires conjointement avec les couches d'enveloppement précédemment étalées (90) encapsulent l'empilement (32), la première section de rampe (70) et la deuxième section de rampe (80), dans lequel la ou les plusieurs couches d'enveloppement supplémentaires sont l'un parmi un tissu renforcé de fibres de verre, un tissu renforcé de fibres de carbone, un tissu renforcé de fibres d'aramide et un tissu renforcé de fibres de basalte ;
- fournir (560) une résine et amener la résine à s'infiltrer dans l'empilement (32), les première et deuxième sections de rampe (70, 80) et les couches d'enveloppement (90) et les couches d'enveloppement supplémentaires, le cas échéant ; et
- durcir (570) la résine pour lier mutuellement l'empilement (32), les première et deuxième sections de rampe (70, 80), les couches d'enveloppement (90) et les couches d'enveloppement supplémentaires, le cas échéant.

11. Procédé (500) selon la revendication 10, dans lequel la première section de rampe (70) est de forme trapézoïdale.

12. Procédé (500) selon la revendication 10 ou 11, dans lequel la deuxième section de rampe (80) est en forme de prisme triangulaire.

13. Procédé (500) selon l'une des revendications 10 à 12, dans lequel la première section de rampe (70) et/ou la deuxième section de rampe (80) est/sont réalisée(s) à partir d'au moins l'un parmi le bois de balsa, un matériau d'âme en nid d'abeilles et un matériau d'âme en mousse.

14. Procédé (500) selon l'une des revendications 10 à 13, dans lequel les bandes (1) sont des bandes pultrudées de matériau composite.

15. Procédé de fabrication d'une pale de rotor d'éolienne (10), dans lequel la pale de rotor d'éolienne (10) est fabriquée en utilisant un ensemble de semelle de longeron préformé (30) selon l'une des revendications 1 à 7.
